# EUROPEAN PATENT APPLICATION

(11) **EP 2 965 633 A1**
(43) Date of publication of application: **13.01.2016**
(21) Application number: 14760957.2
(22) Date of filing: 26.02.2014
(51) Int. Cl.: A22C 29/02

(54) **CRAB SHELLING DEVICE**

(30) Priority: 04.03.2013 CN 201320096066 U
(71) Applicant: Suzhou Xi Fu Rui Agriculture Technologies Co. Ltd., Suzhou, Jiangsu 215123 (CN)
(72) Inventor: ZHOU, Pengfei, Suzhou Jiangsu 215123 (CN)
(74) Representative: von Kreisler Selting Werner - Partnerschaft von Patentanwälten und Rechtsanwälten mbB
(86) International application number: PCT/CN2014/072554
(87) International publication number: WO 2014/135020

(57) **Abstract**

Disclosed is a crab shelling device, comprising a first conveyor belt (12) conveying a crab, a cleaving apparatus (2) to cleave open the crab on the first conveyor belt (12), a second conveyor belt (32) conveying the cleaved crab and at least one separating apparatus (4) separating the shell and the meat of the crab on the second conveyor belt (32). The cleaving apparatus (2) comprises a frame body (21), two sets of transfer mechanisms (22) above the frame body (21) and arranged parallel along the direction of conveyance of the crab, a crab moving trough (23) arranged between the two sets of transfer mechanisms (22), a cutting knife (24) arranged vertically in the crab moving trough (23) and a control apparatus (26) controlling the operation of the cutting knife (24) and the transfer mechanisms (22). Each transfer mechanism (22) comprises two transfer wheels (221) arranged opposite to each other along the direction of conveyance of the crab and a transfer belt (222) arranged in cooperation on the periphery of the two transfer wheels (221). The separating apparatus (4) comprises a material bin (42) arranged above the second conveyor belt (32), a material suctioning tube (43) fixed on the material bin (42) and a driving mechanism (44) driving the operation of the material suctioning tube (43).

## Description

The present application claims the priority of Chinese Patent Application No. 201320096066.6, titled "CRAB SHELLING DEVICE", filed on Mar. 4, 2013 in the SIPO (Sate Intellectual Property Office of the P.R.C.), the disclosure of which is incorporated herein by reference in its entirety.

### TECHNICAL FIELD

The present disclosure relates to a shelling device, particularly to a crab shelling device for separating the crab meat from the crab shell.

### BACKGROUND

Crabs are a kind of arthropoda crustacean having delicious taste and rich nutritious. In recent years, with rapid increase in aquaculture production of crabs, there are more and more food-related types processed by the crabs and well received by the consumers.

Most crab-processing products are made from crab meat and crab roe, so we can see that it is a key step to separate the crab meat and the crab roe from the crab shell. In the existing crab processing flows, the crab meat and the crab roe are separated from the crab shell basically via manual work. The main processes include manually using a variety of small tools, such as knives, scissors, tweezers, spoons etc., to scrape the crab meat and the crab roe from the crab shells, after cleaning and cooking the crabs. It is understandable that such processes may result in large labor intensity, low processing efficiency and the waste of more residual meat on the crab shells, and so on. Besides, such processes may cause the manual processing pollution and affect food safety.

Hence, it is desirable to provide an improved automatic crab shelling device to solve the above problem.

### SUMMARY

An object of the present embodiment is to provide a high efficiency crab shelling device which is capable of separating the crab meat from the crab shell.

In order to achieve the above object, the present embodiment provides a crab shelling device including a first belt for conveying crabs, a cutting mechanism for dissecting the crabs conveyed by the first belt, a second belt for conveying the crabs after being dissected and at least one separating mechanism for separating crab meat from crab shells of the crabs conveyed by the second belt. The cutting mechanism includes a frame body, a pair of transmitting apparatuses positioned above the frame body, a slot formed between the pair of transmitting apparatuses for the crabs moving therethrough, a cutter vertically extending into the slot and a control apparatus for controlling working of the cutter and the transmitting apparatuses. The pair of transmitting apparatuses are parallel to each other along a crab conveying direction. Each transmitting apparatus includes two transport wheels oppositely disposed along the conveying direction and a transport belt associated to outer surfaces of the transport wheels. The separating mechanism includes a storage box located above the second convey mechanism, a suction tube fixed to the storage box and a driving apparatus for driving working of the suction tube.

Preferably, the cutter is round and includes a plurality of knife cutouts which are averagely distributed on a circumference of the cutter.

Preferably, each knife cutout is of a semi-elliptical shape.

Preferably, the cutting mechanism includes a rod connected to the transport wheels in order to adjust a distance between the pair of transmitting apparatuses.

Preferably, each transmitting apparatus includes a plurality of tensioning wheels between the two transport wheels. The tensioning wheels are located inside and engage with the transport belt in order to tension the transport belt.

Preferably, the frame body includes a water-storage box under the transmitting apparatuses and a drain hole formed on the water-storage box. The drain hole is in communication with the water-storage box.

Preferably, the cutting mechanism includes a box for shielding the transmitting apparatuses, the slot and the cutter, and a delivery tube fixed to the box for spraying cleaning fluid to clean the cutter.

Preferably, the storage box of the separating mechanism includes a discharge opening and a transparent glass door for opening or closing the discharge opening.

Preferably, the crab shelling device includes a working table at opposite sides of the second belt.

Preferably, the separating mechanism includes a temperature alarm apparatus set on the storage box.

Preferably, the cutting mechanism includes a feed port set at one end of the frame body for receiving the crabs from the first belt and a discharge port set at the other end of the frame body for discharging the crabs after being dissected.

Preferably, the feed port is horizontally arranged, and the discharge port is inclined an angle with respect to the feed port.

Preferably, the tensioning wheels of each transmitting apparatus includes a first tensioning wheel located between the first belt and the cutter along the conveying direction, a second tensioning wheel located at a position where the cutter is adjacent to the first belt, and a third tensioning wheel located at a position where the cutter is adjacent to a second belt. The first tensioning wheel is arranged adjacent to the second tensioning wheel.

Preferably, the second tensioning wheel is smaller than the first tensioning wheel, and the first tensioning wheel is smaller than the third tensioning wheel.

Preferably, the crab shelling device includes a plurality of the separating mechanisms arranged along the conveying direction, and the second belt extends through the plurality of the separating mechanisms.

The advantage of the present application is that through the first belt conveying the crabs to the cutting mechanism, then through the cutting mechanism cutting the crabs into a plurality of parts, then through the second belt conveying the dissection parts and eventually the separating mechanism separating out the crab meat and/or the crab roe, the crab shelling device according to the illustrated embodiment of the present invention can realize automatically processing, thereby improve the processing efficiency of the processing products.

### BRIEF DESCRIPTION OF THE DRAWINGS

FIG. 1 is a perspective view of a crab shelling device in accordance with an illustrated embodiment of the present invention;
FIG. 2 is a front view of a first convey mechanism of the crab shelling device shown in FIG. 1;
FIG. 3 is a top view of a cutting mechanism of the crab shelling device shown in FIG. 1;
FIG. 4 is a front view of the cutting mechanism shown in FIG. 3; and
FIG. 5 is a front view of a second convey mechanism and a separating mechanism of the crab shelling device shown in FIG. 1.

### ILLUSTRATED EMBODIMENTS

Detailed description of the present application will be depicted in combination with embodiments shown in figures. It should be noted that the present application should not be restricted to the embodiments, and modifications of structure, method or function to those of ordinary skill in the art according to the embodiments are all included within the protection scope of the present application.

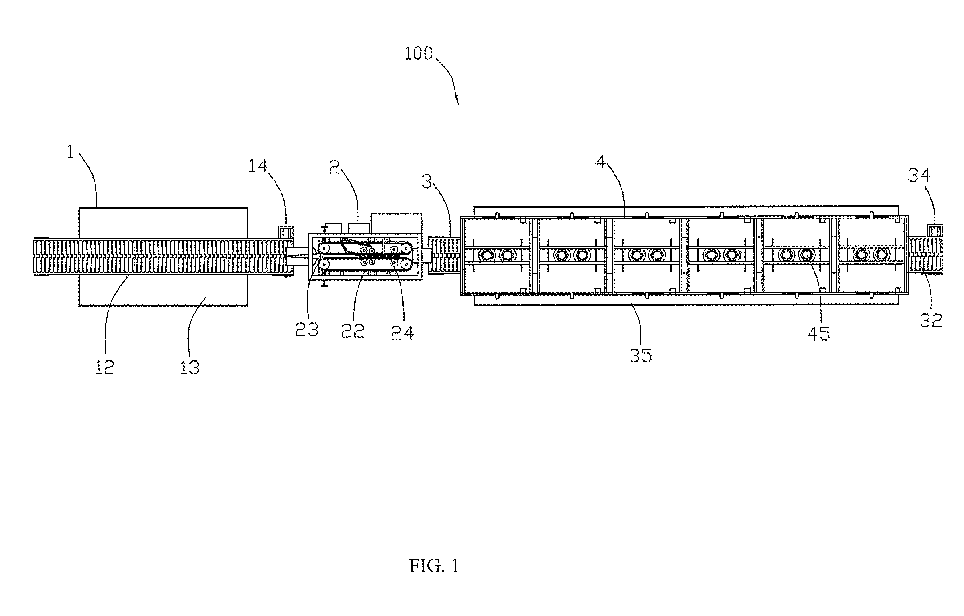

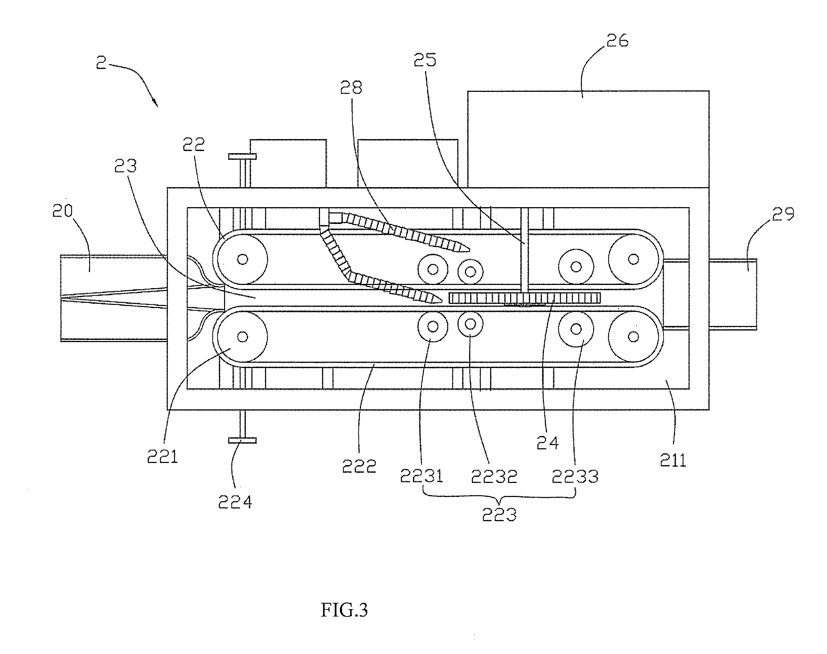

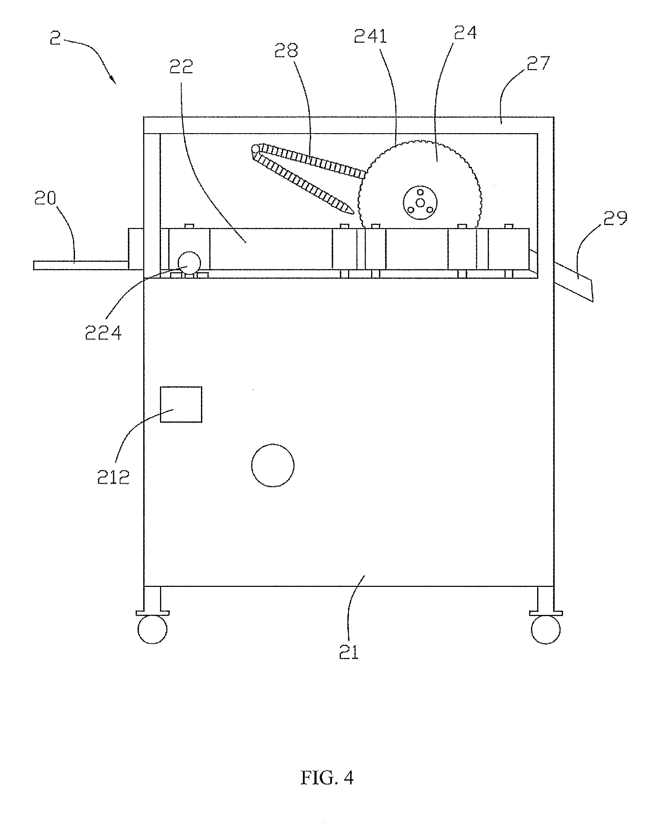

FIGS. 1 to 5 disclose a crab shelling device 100 in accordance with a preferred embodiment of the present application. The crab shelling device 100 is used for processing crabs (not shown) in order to separate the crab meat from the crab shell. The crab shelling device 100 includes a first convey mechanism 1 for conveying the crabs, a cutting mechanism 2 for dissecting the crabs transported by the first convey mechanism 1, a second convey mechanism 3 for conveying the dissection parts of the crabs, and at last one separating mechanism 4 for separating the crab meat from the crab shell.

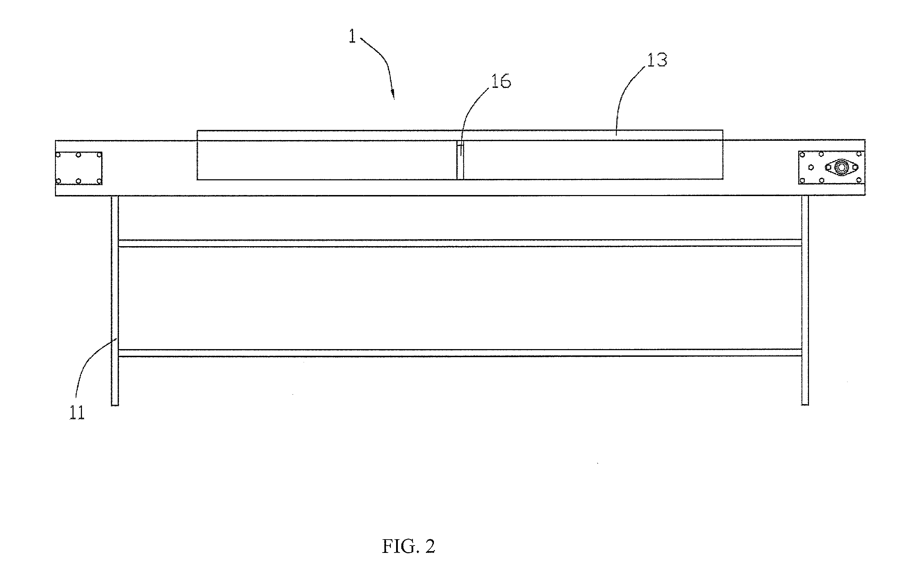

Referring to FIGS. 1 and 2, the first convey mechanism 1 includes a first bracket 11, a first belt 12 supported on top of the first bracket 11, a wing plate 13 located on opposite sides of the first belt 12, a first studdle 16 connected to the first bracket 11 and located below the wing plate 13 for supporting the wing plate 13, and a first motor 14 for driving the first belt 12. The crabs can be automatically conveyed to the cutting mechanism 2 along a conveying direction via the first belt 12 under the drive of the first motor 14. Besides, the wing plate 13 can be used for workers (not shown) to select disqualified crabs or rearrange the crabs in a predetermined direction so that the crabs can orderly enter the cutting mechanism 2.

Referring to FIGS. 1, 3 and 4, the cutting mechanism 2 includes a first frame body 21, a pair of transmitting apparatuses 22 positioned above the first frame body 21, a cutter 24 vertically extending into a slot 23 formed by the pair of transmitting apparatuses 22, an input axis 25 securely connected to the cutter 24, and a control apparatus 26 for controlling working of the cutter 24 and the transmitting apparatuses 22. The pair of transmitting apparatuses 22 are parallel to each other along the conveying direction. The slot 23 is adapted for the crabs to be conveyed therethrough. The cutting mechanism 2 further includes a feed port 20 set at one end of the first frame body 21 for receiving the crabs from the first belt 12, a discharge port 29 set at the other end of the first frame body 21 for discharging the dissected crabs, a box 27 for shielding the transmitting apparatuses 22, the slot 23 and the cutter 24, and a delivery tube 28 fixed to the box 27 for spraying cleaning fluid to clean the cutter 24. The feed port 20 is horizontally arranged. The discharge port 29 is inclined an angle with respect to the feed port 20 for smoothly discharging the dissected crabs.

The first frame body 21 includes a water-storage box 211 under the transmitting apparatuses 22 and a drain hole 212 formed on the water-storage box 211 and in connection with the water-storage box 211. Each transmitting apparatus 22 includes two transport wheels 221 oppositely disposed along the conveying direction, a transport belt 222 associated to the outer surface of the transport wheels 221, and a plurality of tensioning wheels 223 located between the two transport wheels 221 along the conveying direction. The tensioning wheels 223 are located inside and engage with the transport belt 222 in order to tension the transport belt 222. The transport belt 222 is elastic. The cutting mechanism 2 further includes a rod 224 connected to the transport wheels 221 in order to adjust a distance between the transmitting apparatuses 22. According to the illustrated embodiment of the present invention, the cutter 24 is round and includes a plurality of knife cutouts 241 which are averagely distributed on a circumference of the cutter 24. Each knife cutout 241 is of a semi-elliptical shape so that the crabs cannot fly out of the cutting mechanism 2 because of the gravitation generated by each semi-elliptical knife cutout 241, thereby the cutting process can be effectively operated. The input axis 25 is perpendicularly connected to a center of the cutter 24 and is driven by the control apparatus 26 so as to rotate the cutter 24. The tensioning wheels 223 of each transmitting apparatus 22 includes a first tensioning wheel 2231 located between the first belt 12 and the cutter 24 along the conveying direction, a second tensioning wheel 2232 located at a position where the cutter 24 is adjacent to the first belt 12, and a third tensioning wheel 2233 located at a position where the cutter 24 is adjacent to a second belt 32. The first tensioning wheel 2231 is arranged adjacent to the second tensioning wheel 2232. The second tensioning wheel 2232 is smaller than the first tensioning wheel 2231, and the first tensioning wheel 2231 is smaller than the third tensioning wheel 2233, thereby during conveying, the crabs can be clamped between the transport belts 222 of the transmitting apparatuses 22 or between the transmitting apparatuses 22 and the cutter 24.

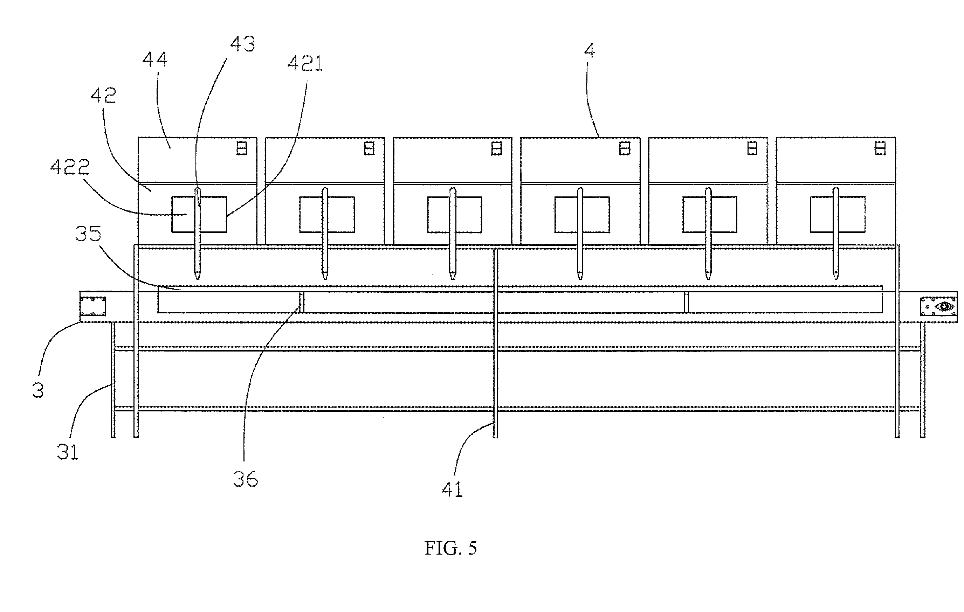

Referring to FIGS. 1 and 5, the second convey mechanism 3 includes a second bracket 31, the second belt 32 supported on top of the second bracket 31 and a second motor 34 for driving the second belt 32.

The separating mechanism 4 includes a second frame body 41 arranged outside of the second bracket 31, a plurality of storage boxes 42 fixed on top of the second frame body 41, a plurality of suction tubes 43 fixed to storage boxes 42 for separating the crab meat and/or the crab roe, a driving apparatus 44 for driving working of the suction tubes 43, and a plurality of temperature alarm apparatuses 45 set on the storage boxes 42. Each storage box 42 includes a discharge opening 421 and a transparent glass door 422 for opening or closing the discharge opening 421. The second frame body 41 is higher than the second bracket 31. The storage boxes 42 are positioned above the second belt 32 of the second convey mechanism 3 so that the dissection parts of the crabs can be automatically conveyed to a position under the separating mechanism 4 via the second belt 32 under the drive of the second motor 34. Besides, the second convey mechanism 3 includes a working table 35 at opposite sides of the second belt 32 for placing the dissection parts and a second studdle 36 for supporting the working table 35. The working table 35 can be adapted for placing the dissection parts of the crabs which have been conveyed to the position under the storage boxes 42. As a result, the dissection parts of the crabs can be taken up by the workers to be in alignment with the suction tubes 43 for separating the crab meat and/or the crab roe from the crab shells. The crab meat and/or the crab roe separated from the crab shells are collected into the storage boxes 42 through the suction tubes 43. Once the temperature in the storage boxes 42 is overheated after multiple operations, the temperature alarm apparatus 45 will be triggered in order to ensure the safety of the workers.

Referring to FIGS. 1 to 5, according to the illustrated embodiment of the present invention, when the crab shelling device 100 starts to work, firstly, the crabs are conveyed to move towards the cutting mechanism 2 via the first belt 12 under the drive of the first motor 14. When the crabs move adjacent to the cutting mechanism 2, the crabs are rearranged in a predetermined direction so that the crabs can orderly enter into the feed port 20 of the cutting mechanism 2. Then, under the control of the control apparatus 26, the pair of transmitting apparatuses 22 begin to run. Under this condition, the crabs are clamped or restricted by the adjacent transport belts 222 of the pair of transmitting apparatuses 22 in the slot 23. Then, the crabs are subsequently conveyed to move towards the cutter 24 along the conveying direction and each crab is ultimately cut into two parts. After the crabs have been dissected, the two parts are continued to be conveyed by the transport belts 222 along lateral sides of the cutter 24. The dissection parts finally move through the discharge port to drop down onto the second belt 32. Secondly, the dissection parts are conveyed by the second belt 32 under the drive of the second motor 34 to the position under the separating mechanism 4. Then, the dissection parts of the crabs under the separating mechanism 4 are taken up by the workers to be in alignment with the suction tubes 43 for suctioning out the crab meat and/or the crab roe from the crab shells. The crab meat and/or the crab roe separated from the crab shells are collected into the storage boxes 42 through the suction tubes 43. Finally, when the workers find that the crab meat and/or the crab roe in the storage boxes 42 are going to full as observed through the transparent glass door 422, the crab meat and/or the crab roe will be taken out from the storage boxes 42 through the discharge openings 421.

In addition, the number of the separating mechanism 4 can be one or more according to the present application. When there is only one separating mechanism 4, the crab meat and the crab roe can be separated from the crab shells either separately or simultaneously. When there are multiple separating mechanisms 4, on one hand, the crab meat and the crab roe can be suctioned out from the crab shells separately and can be placed separately; on the other hand, the multiple separating mechanisms 4 can work together to improve processing efficiency. Furthermore, under this condition, even one of the separating mechanisms 4 is broken, the remaining separating mechanisms 4 can also work. Besides, each separating mechanism 4 can be provided with multiple suction tubes 43 for improving suction efficiency.

According to the description above, through the first belt 12 conveying the crabs to the cutting mechanism 2, the cutting mechanism 2 cutting the crabs into a plurality of parts, the second belt 32 conveying the dissection parts and the separating mechanism 4 separating out the crab meat and/or the crab roe, the crab shelling device 100 according to the illustrated embodiment of the present invention can realize automatically processing, thereby improve the processing efficiency of the processing products.

It is to be understood, however, that even though exemplary embodiments have been set out in the foregoing description, it does not mean that each embodiment has only one independent technical solution. The narration of the specification is only for clear description. Those of ordinary skill in the art should consider the specification as a whole. Technical solutions of all the embodiments can be appropriately combined to form other embodiments which are understandable by those skilled in the art.

Series of detailed instructions listed above is just for the invention of feasibility implementation specific instructions, they are not used to limit the scope of protection of the invention, without departing from the spirit of invention skills equivalent implementations or changes made should be included in the scope of protection of the invention.

## Claims

1. A crab shelling device, **characterized in that** the crab shelling device comprises a first belt for conveying crabs, a cutting mechanism for dissecting the crabs conveyed by the first belt, a second belt for conveying the crabs after being dissected and at least one separating mechanism for separating crab meat from crab shells of the crabs conveyed by the second belt; the cutting mechanism comprising a frame body, a pair of transmitting apparatuses positioned above the frame body, a slot formed between the pair of transmitting apparatuses for the crabs moving therethrough, a cutter vertically extending into the slot and a control apparatus for controlling working of the cutter and the transmitting apparatuses, the pair of transmitting apparatuses being parallel to each other along a crab conveying direction, each transmitting apparatus comprising two transport wheels oppositely disposed along the conveying direction and a transport belt associated to outer surfaces of the transport wheels; the separating mechanism comprising a storage box located above the second convey mechanism, a suction tube fixed to the storage box and a driving apparatus for driving working of the suction tube.

2. The crab shelling device as claimed in claim 1, **characterized in that** the cutter is round and comprises a plurality of knife cutouts which are averagely distributed on a circumference of the cutter.

3. The crab shelling device as claimed in claim 2, **characterized in that** each knife cutout is of a semi-elliptical shape.

4. The crab shelling device as claimed in claim 1, **characterized in that** the cutting mechanism comprises a rod connected to the transport wheels in order to adjust a distance between the pair of transmitting apparatuses.

5. The crab shelling device as claimed in claim 1, **characterized in that** each transmitting apparatus comprises a plurality of tensioning wheels between the two transport wheels, the tensioning wheels are located inside and engage with the transport belt in order to tension the transport belt.

6. The crab shelling device as claimed in claim 1, **characterized in that** the frame body comprises a water-storage box under the transmitting apparatuses and a drain hole formed on the water-storage box, the drain hole being in communication with the water-storage box.

7. The crab shelling device as claimed in claim 1, **characterized in that** the cutting mechanism comprises a box for shielding the transmitting apparatuses, the slot and the cutter, and a delivery tube fixed to the box for spraying cleaning fluid to clean the cutter.

8. The crab shelling device as claimed in claim 1, **characterized in that** the storage box of the separating mechanism comprises a discharge opening and a transparent glass door for opening or closing the discharge opening.

9. The crab shelling device as claimed in claim 1, **characterized in that** the crab shelling device comprises a working table at opposite sides of the second belt.

10. The crab shelling device as claimed in claim 1, **characterized in that** the separating mechanism comprises a temperature alarm apparatus set on the storage box.

11. The crab shelling device as claimed in claim 1, **characterized in that** the cutting mechanism comprises a feed port set at one end of the frame body for receiving the crabs from the first belt and a discharge port set at the other end of the frame body for discharging the crabs after being dissected.

12. The crab shelling device as claimed in claim 11, **characterized in that** the feed port is horizontally arranged, and the discharge port is inclined an angle with respect to the feed port.

13. The crab shelling device as claimed in claim 5, **characterized in that** the tensioning wheels of each transmitting apparatus comprises a first tensioning wheel located between the first belt and the cutter along the conveying direction, a second tensioning wheel located at a position where the cutter is adjacent to the first belt, and a third tensioning wheel located at a position where the cutter is adjacent to a second belt, the first tensioning wheel being arranged adjacent to the second tensioning wheel.

14. The crab shelling device as claimed in claim 13, **characterized in that** the second tensioning wheel is smaller than the first tensioning wheel, and the first tensioning wheel is smaller than the third tensioning wheel.

15. The crab shelling device as claimed in claim 1, **characterized in that** the crab shelling device comprises a plurality of the separating mechanisms arranged along the conveying direction, and the second belt extends through the plurality of the separating mechanisms.
